# FASCICULE DE BREVET EUROPEEN

(11) **EP 2 550 185 B1**
(45) Date de publication et mention de la délivrance du brevet: **29.10.2014**
(21) Numéro de dépôt: 11711771.3
(22) Date de dépôt: 23.03.2011
(51) Int. Cl.: B60R 21/216

(54) **AGENCEMENT DE COUSSIN DE SECURITE GONFLABLE DANS UNE PLANCHE DE BORD COMPORTANT UN VOLET RELIE A LA PLANCHE DE BORD PAR UN LIEN LINEAIRE**
AUFBLASBARE AIRBAGANORDNUNG AUF EINEM ARMATURENBRETT MIT EINER ÜBER EINE LINEARE VERBINDUNG MIT DEM ARMATURENBRETT VERBUNDENEN KLAPPE
INFLATABLE AIRBAG ARRANGEMENT IN A DASHBOARD, COMPRISING A FLAP CONNECTED TO THE DASHBOARD BY MEANS OF A LINEAR LINK

(30) Priorité: 24.03.2010 FR 1052137
(43) Date de publication de la demande: 30.01.2013
(73) Titulaire: Faurecia Intérieur Industrie, 92000 Nanterre (FR)
(72) Inventeur: ORY, Daniel, F-95130 Le Plessis-Bouchard (FR)
(74) Mandataire: Beaudouin-Lafon, Emmanuel
(86) Numéro de dépôt international: PCT/EP2011/001444
(87) Numéro de publication internationale: WO 2011/116950

(56) Documents cités:
- EP-A1- 0 695 671
- DE-A1-102008 039 552
- JP-A- 8 091 163
- US-A- 5 306 042
- US-A- 5 398 960
- US-A1- 2003 020 269
- US-A1- 2003 184 058
- US-A1- 2003 184 063
- US-A1- 2005 127 642
- US-A1- 2005 167 953
- US-A1- 2008 012 273

## Description

L'invention concerne un agencement de coussin de sécurité gonflable dans un corps de planche de bord de véhicule automobile, ce coussin étant par exemple positionné pour protéger frontalement un occupant du véhicule installé à côté du conducteur de ce véhicule.

### ARRIERE PLAN DE L'INVENTION

Dans un tel agencement, le corps de planche de bord est pourvu d'une fenêtre qui est fermée à sa face supérieure par un volet, et d'un canal de tir fixé en face inférieure du corps de planche tout en entourant la fenêtre.

Le canal de tir présente une face supérieure qui épouse la forme bombée du corps de planche de bord, et une face inférieure généralement plane à laquelle est fixé un module de coussin de sécurité de type standardisé.

Lorsque le coussin de sécurité se gonfle, il traverse le canal de tir pour venir en appui contre la face inférieure du volet, provoquant ainsi l'ouverture du volet. Le coussin traverse alors la fenêtre du corps de planche de bord pour se déployer dans l'habitacle du véhicule afin d'en protéger les occupants.

D'une manière générale, la fenêtre a un contour rectangulaire, et le volet est articulé autour du bord transversal de cette fenêtre qui est le plus en avant par rapport à la direction d'avancement du véhicule, c'est-à-dire celui qui est le plus proche du pare-brise.

Compte tenu de la rapidité d'ouverture du volet, celui-ci peut se briser contre le pare brise lors de l'ouverture provoquée par le gonflage du coussin de sécurité. Ce bris peut se traduire par la projection de débris du volet vers les occupants du véhicule, ce qui est susceptible de créer des lésions aux occupants.

Pour remédier à cet inconvénient, le document US2005127642 enseigne de prévoir des liens latéraux solidarisant chaque bord latéral du volet au bord latéral correspondant de la fenêtre, ces liens étant lâches lorsque le volet est fermé. L'ouverture du volet est alors limitée par les liens de retenue latéraux qui se tendent lorsque le coussin se gonfle, assurant ainsi que le volet ne puisse pas venir heurter le pare-brise.

Les efforts apparaissant lors de l'ouverture sont importants du fait de la rapidité de déploiement qui est souhaitée pour le coussin de sécurité, de sorte que la tenue mécanique des liens de retenue est généralement insuffisante. En pratique, les liens ont tendance à s'arracher du corps de planche de bord, ce qui provoque la dégradation du volet, et présente par là même un risque de projection de débris vers les occupants du véhicule. Le document JP 08-091 163 A divulgue un agencement selon le préambule de la revendication 1.

### OBJET DE L'INVENTION

Le but de l'invention est de proposer une solution pour remédier à ces inconvénients.

### RESUME DE L'INVENTION

A cet effet, l'invention a pour objet un agencement de coussin de sécurité gonflable de planche de bord de véhicule automobile selon la revendication 1.

Avec cette solution, le lien est fixé au reste du corps de planche de bord d'une manière très ferme du fait que le canal de tir présente une meilleure tenue mécanique que le corps de planche de bord.

Les ouvertures en forme d'encoche ou d'échancrure débouchant dans une face supérieure ou inférieure du canal de tir facilitent la mise en place du lien et autorisent notamment l'utilisation d'un lien formant une boucle fermée.

L'invention a également pour objet un agencement tel que défini ci-dessus, dans lequel le canal de tir comporte au niveau de ses bords latéraux des échancrures, comportant chacune un col débouchant dans la face supérieure du canal de tir et un corps d'ouverture raccordé au col et présentant des dimensions supérieures à celles du col, le corps d'ouverture étant déporté par rapport au col vers le bord d'articulation du volet, et au moins un lien solidarisé au volet et présentant une portion qui traverse radialement une échancrure pour être retenu fermement au niveau de la face externe du canal de tir afin de constituer une portion de lien limitant l'ouverture du volet.

L'invention a également pour objet un agencement tel que défini ci-dessus, dans lequel le canal de tir comporte un bord latéral pourvu de deux échancrures et dans lequel le lien constitue localement une boucle traversant radialement le canal de tir au niveau de ces deux échancrures en étant retenu par la portion de face externe du canal de tir située entre les deux échancrures.

L'invention a également pour objet un agencement tel que défini ci-dessus, dans lequel le canal de tir comporte un bord longeant le bord d'articulation du volet, ce bord étant pourvu d'une ou plusieurs encoches débouchant dans la face inférieure du canal de tir, et comprenant au moins un lien solidarisé au volet et traversant radialement l'encoche en étant retenu au niveau de la face externe du canal de tir pour constituer une articulation du volet sur le corps de planche de bord.

L'invention a également pour objet un agencement tel que défini ci-dessus, dans lequel le bord du canal de tir longeant le bord d'articulation du volet comporte au moins deux encoches, et un lien formant localement une boucle traversant radialement le canal de tir au niveau de deux encoches, en étant retenu par la portion de face externe du canal de tir située entre ces deux encoches pour constituer une articulation du volet sur le corps de planche de bord.

### BREVE DESCRIPTION DES DESSINS

La figure 1 est une vue en perspective montrant l'agencement selon l'invention lorsque le volet est ouvert ;
La figure 2 est une vue latérale de l'agencement selon l'invention lorsque le volet est ouvert ;
La figure 3 est une vue de détail montrant les échancrures de l'agencement selon l'invention dépourvues de liens ;
La figure 4 est une vue de détail montrant les échancrures de l'agencement selon l'invention lorsqu'elles sont traversées par des portions de liens mises sous tension par l'ouverture du volet.

### DESCRIPTION DETAILLEE DE L'INVENTION

L'idée à la base de l'invention est de tirer parti du canal de tir d'un tel agencement pour constituer des points d'ancrage solides pour les liens reliant le volet au reste de la planche de bord.

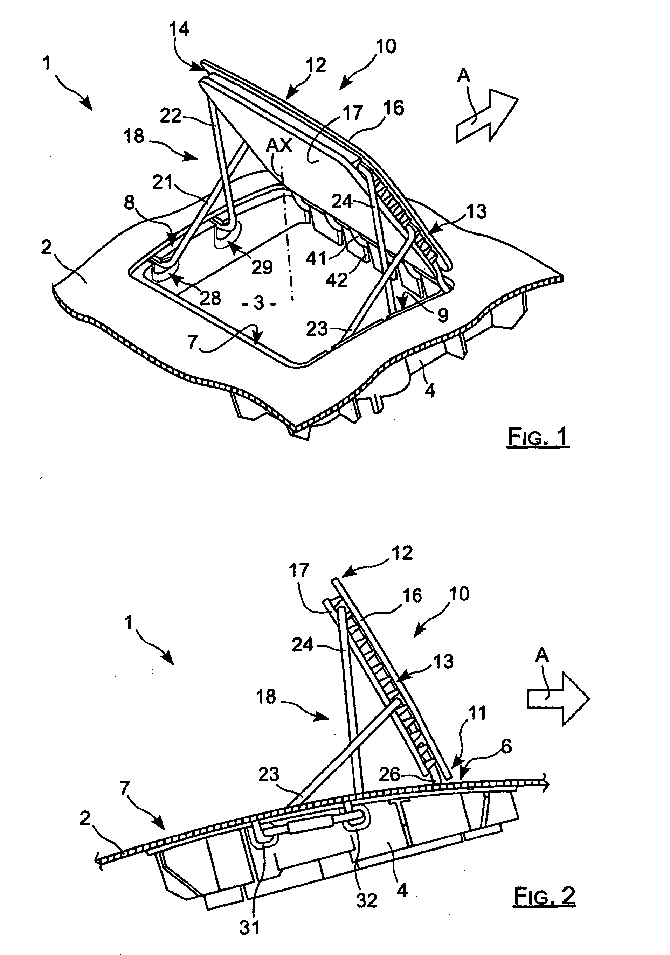

Comme visible dans la figure 1, l'agencement selon l'invention généralement repéré par 1 est intégré à une planche de bord comportant un corps de planche généralement repéré par 2 présentant une fenêtre 3 rectangulaire de passage d'un coussin de sécurité non représenté.

Un canal de tir généralement repéré par 4 présentant lui aussi un contour interne généralement rectangulaire est fixé en face inférieure du corps de planche de bord 2 de manière à entourer la fenêtre 3.

La fenêtre 3 et le canal de tir 4 délimitent conjointement un contour rectangulaire comportant un bord transversal avant 6 par rapport à la direction d'avancement A du véhicule, ainsi qu'un bord transversal arrière 7 opposé au bord avant 6. Les deux bords latéraux de ce contour qui sont repérés par 8 et 9 s'étendent à peu près parallèlement à la direction A.

La fenêtre 3 est fermée par un volet 10, lui aussi rectangulaire, comportant un bord transversal avant 11, un bord transversal arrière 12, et deux bords latéraux 13 et 14. Le bord transversal avant 11 du volet est articulé sur le bord transversal avant 6 de la fenêtre, pour s'ouvrir lorsque le coussin de sécurité se gonfle.

Comme visible dans les figures, le volet 10 comporte une paroi 16 qui s'étend dans le prolongement du corps de planche 2 lorsque le volet est fermé, et une plaque 17 fixée à la face inférieure de cette paroi 16.

La plaque 17 présente une face inférieure sensiblement plane, et elle présente au contraire une série de nervures transversales et longitudinales qui dépassent de sa face supérieure. La plaque 17 est fixée à la paroi 16 par exemple par soudage aux ultrasons ou analogue, de telle manière que ce sont les arêtes saillantes des nervures qui sont solidarisées à la face inférieure de la paroi 16.

Il existe ainsi un espace entre le corps généralement plan de la plaque 17 et la face inférieure de la paroi 16, cet espace étant délimité par les différentes nervures transversales et longitudinales qui forment de la sorte des canaux situés entre le corps de plaque 17 et la paroi 16.

Comme visible sur la figure, un lien linéaire généralement repéré par 18 est fixé au volet 10 et au corps de planche de bord 2. Ce lien comporte deux portions de retenue latérales 21 et 22 qui relient les bords latéraux 9 à 13, et deux autres portions latérales 23 et 24 qui relient les bords latéraux et 8 à 14 pour limiter l'ouverture du volet 10.

Complémentairement, ce lien 18 comprend également une portion d'articulation 26 qui traverse les bords transversaux 6 et 11 de la fenêtre 3 et du volet 10 pour constituer ou renforcer l'articulation de ce volet 10 sur le reste de la planche de bord.

Le lien 18 est fixé au volet 10 en étant engagé entre les nervures transversales de la plaque 17, de sorte qu'il est ainsi emprisonné entre le corps de la plaque 17 et la paroi 16 tout en étant retenu par les nervures séparant ces deux éléments, ces nervures ayant avantageusement des formes et des dimensions appropriées pour assurer une retenue ferme de ce lien.

Dans l'exemple des figures, le lien 18 s'étend de la portion latérale 22 à la portion latérale 24 en étant engagé dans une gorge délimitée par deux nervures transversales de la plaque 17. Les deux portions latérales 21 et 23 sont également engagées entre des nervures consécutives de la plaque 17, et elles suivent entre la plaque 17 et la paroi 16 des chemins les conduisant vers le bord d'articulation 11 du volet pour constituer des portions d'articulation 26 de ce lien 18.

Comme visible dans les figures, le bord latéral 8 du canal de tir 4 comporte deux ouvertures 28 et 29 traversant ce bord 8 radialement par rapport à un axe AX normal à la fenêtre 3 et centré sur celle-ci. Chaque ouverture 28, 29 est une échancrure qui traverse radialement le bord 8 du canal de tir 4 pour mettre en communication une face interne avec une face externe de ce bord 8 du canal de tir 4, et qui de plus débouche également dans la face supérieure du canal de tir, c'est-à-dire la face par laquelle ce canal de tir est fixé à la face inférieure du corps de planche 2.

Les portions de retenue 21 et 22 du lien 18 sont fixées au bord latéral 8 du canal de tir 4 en étant engagées respectivement dans l'échancrure 28 et dans l'échancrure 29, en constituant localement une boucle qui traverse le bord 8. La portion de cette boucle qui réunit les portions 21 et 22 est ainsi en appui sur la portion de la face externe du bord 8 du canal 4 qui est située entre les deux échancrures 28 et 29.

De manière analogue, les portions de retenue 23 et 24 du lien 18, qui relient les bords latéraux 13 et 9 sont fixées à la planche de bord en étant engagée dans deux autres échancrures 31 et 32 qui traversent radialement le bord 9 du canal de tir pour mettre en communication la face interne avec la face externe de ce bord tout en débouchant en face supérieure du canal de tir 4.

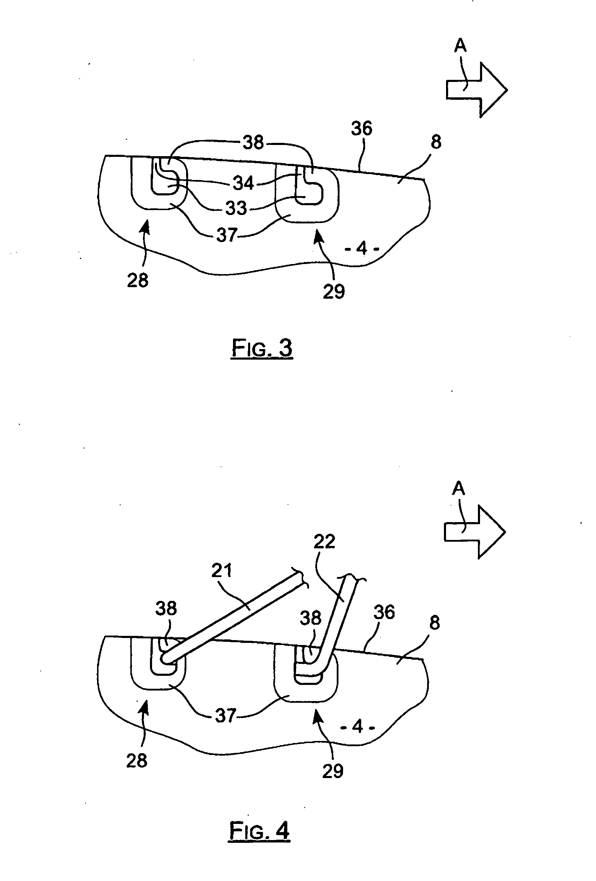

Comme visible plus clairement dans la figure 3, chaque échancrure 28, 29 comporte d'une part un corps d'ouverture 33 de dimensions supérieures au diamètre du lien 18 et un col 34 de dimensions très proches du diamètre du lien 18, et par lequel l'échancrure 28 débouche dans la face supérieure 36 du canal de tir 4.

Comme visible dans les figures, dans chacune des échancrures 28, 29, l'ouverture principale 33 est déportée vers l'avant du véhicule, c'est-à-dire vers le bord d'articulation 6, par rapport au col 34. Ce déport permet de définir en partie supérieure de chaque échancrure une avancée formant éperon ou crochet 38, formée dans le matériau rigide du canal de tir 4, et contre laquelle le lien 18 vient en appui lorsque le volet 10 s'ouvre, cette situation étant représentée en figure 4.

Complémentairement, les bords intérieurs et extérieurs des échancrures 28 et 29 sont adoucis. Chacun de ces bords 37 qui correspond au raccordement de la surface interne délimitée par une échancrure et la surface interne ou externe du bord 8 du canal de tir 4 est adouci pour présenter un rayon de courbure de l'ordre du rayon ou du diamètre du lien linéaire, au lieu d'avoir au contraire un profil d'arête aiguë.

Dans ces conditions, lorsque les portions de retenue du lien 18 sont mises sous tension brutalement du fait de l'ouverture du volet, le risque de rupture de ce lien 18 au niveau des échancrures est à peu près annulé du fait que le lien est alors en appui sur une surface courbe repérée par 37 dans les figures.

Comme on l'aura compris, les échancrures 31 et 32 du bord 9 du canal de tir 4, qui reçoivent les portions latérales de liens de retenue 23 et 24 ont les mêmes formes et dispositions que les échancrures 28 et 29, et présentent les mêmes avantages.

Les échancrures dans lesquelles sont engagées les portions de retenue du lien 18 sont réalisées dans le matériau du canal de tir 4 qui présente une plus grande tenue mécanique que le corps de planche de bord 2, de sorte qu'elles assurent un maintien ferme du lien 18 lors de l'ouverture du volet 10, sans risque d'arrachement.

Le fait que ces échancrures 28, 29, 31, 32 débouchent en face supérieure du canal de tir 4 facilite l'engagement des portions de liens de retenue 21, 22, 23, 24 : les deux boucles que forment localement d'une part les portions 21 et 22 et d'autre part les portions 23 et 24 peuvent être engagées par la face supérieure 36 du canal de tir, avant assemblage de ce canal 4 avec la face inférieure du corps de planche de bord, ce qui simplifie le processus de fabrication.

Le choix d'échancrures présentant des cols 34 de dimensions sensiblement inférieures au diamètre du lien 18 assure qu'une fois engagé dans ces ouvertures, le lien 18 ne risque pas de s'en dégager de manière intempestive.

Comme indiqué plus haut, le lien 18 comporte une portion d'articulation 26 constituée par une série de boucles dépassant du bord d'articulation 11 du volet 10 en étant régulièrement espacées les unes des autres.

Les brins de ces boucles sont représentés en figure 1 en y étant repérés par 41, et ils sont engagés chacun dans une encoche correspondantes, ces encoches étant repérées par 42. Chaque encoche 42 est réalisée dans le bord avant 6 du canal de tir 4, et elle présente une forme généralement droite orientée verticalement et débouchant dans la face inférieure plane du canal de tir 4.

Lorsque l'ensemble est mis en place, comme dans la figure 1, chaque boucle de la portion d'articulation 26 du lien 18 entoure une portion du bord avant 6 du canal de tir de manière à être en appui sur la portion de la face externe de ce canal qui sépare deux encoches consécutives.

Tout comme dans le cas des portions de lien latérales, les encoches assurent une retenue ferme du lien 18 grâce à laquelle l'ouverture du volet se déroule sans risque d'arrachement ou de destruction de ce volet.

Dans l'exemple illustré sur les figures, les encoches 42 débouchant dans la face inférieure du canal de tir sont généralement droites. Ces encoches peuvent aussi bien avoir des formes du même type que les échancrures 28 et 29, en comportant un corps d'ouverture de dimensions importantes raccordé à un col de dimensions proches ou sensiblement inférieures au diamètre du lien, ce col débouchant dans la face inférieure du canal de tir.

Dans ces conditions, les ouvertures 42 assurent le maintien de chaque brin 41 qui est alors retenu verticalement par le col, ce qui évite qu'il ne descende sous l'effet de son poids propre et qu'il quitte par là même l'ouverture.

L'installation du volet 10 avec les portions de liens latérales et les portions d'articulation est avantageusement réalisée préalablement à la fixation du canal de tir au corps de planche de bord 2. Le lien 18 est par exemple mis en place au niveau de la face supérieure de la plaque 17, entre les nervures prévues à cet effet, de manière à constituer d'une part les boucles dépassant des bords latéraux pour former les portions de lien assurant la retenue du volet, et d'autre part les boucles dépassant du bord d'articulation du volet en vue de former la charnière de ce volet.

Avantageusement, les nervures de la face supérieure de la plaque 17 sont suffisamment proches les unes des autres pour assurer le maintien du lien temporairement, par simple emboîtement entre les nervures.

La plaque 17 est alors présentée par la face inférieure du canal de tir pour engager les boucles du lien 18 formant la portion d'articulation 26 de ce lien, dans les encoches correspondantes du bord avant 6 du canal de tir 4.

Une fois cette opération terminée, le volet peut être maintenu en position ouverte au dessus de l'ouverture 3 pour passer les boucles latérales du lien dans les échancrures des bords latéraux du canal de tir. Les boucles latérales peuvent alors être tirées vers l'extérieur de manière à récupérer la longueur additionnelle de ces boucles pour la placer à l'extérieur du canal de tir afin qu'elle ne risque pas de perturber l'ouverture du volet. Durant cette dernière opération, le volet se place spontanément dans sa position de fermeture.

Le canal de tir avec la plaque 17 peut alors être appliqué en face inférieure du corps de planche de bord 2 pour être fixé à ce dernier, par exemple selon un procédé de soudure par ultrasons, ou par tout autre procédé approprié.

Il est à noter que dans l'exemple des figures, on utilise un lien 18 qui constitue d'une manière générale une unique boucle fermée, constituant de par sa disposition deux boucles latérales et plusieurs boucles au niveau du bord d'articulation.

L'invention s'applique aussi bien à une solution dans laquelle le lien utilisé n'est pas nécessairement une boucle fermée.

En particulier, l'invention s'applique aussi bien à une solution dans laquelle on prévoit uniquement une portion de lien latéral de chaque côté du volet pour limiter son ouverture. Dans ce cas, le canal de tir comporte une seule échancrure dans chacun de ses bords latéraux, et chaque portion de lien de retenue traverse cette échancrure tout en ayant son extrémité fixée à la face externe du canal de tir, par exemple au moyen d'une patte de fixation au par tout autre moyen de fixation situé en face externe du canal de tir.

De manière analogue, la longueur de lien excédentaire est alors tirée pour se trouver au niveau de la face externe du canal de tir lorsque le volet est en position fermée, afin que cette longueur excédentaire ne perturbe pas l'ouverture du volet.

## Revendications

1. Agencement (1) de coussin de sécurité gonflable de planche de bord de véhicule automobile, comprenant un corps de planche de bord (2) présentant une fenêtre (3) de passage d'un coussin de sécurité gonflable, un volet (10) fermant cette fenêtre (3) en étant articulé sur un bord d'articulation transversal (6, 11) de cette fenêtre, l'agencement comportant aussi un canal de tir (4) fixé en face inférieure du corps de planche de bord (2) et formant un cadre entourant la fenêtre (3), ce canal de tir (4) présentant une face inférieure plane destinée à recevoir un module de coussin de sécurité gonflable, au moins un lien (18) fixé au volet (10) et au canal de tir (4) pour former une charnière et/ou pour limiter l'ouverture du volet (10), le canal de tir (4) comportant au moins une ouverture (28, 29, 31, 32, 42) orientée radialement par rapport à la fenêtre (3) pour mettre en communication une face interne et une face externe d'un bord (8, 9, 6) du canal de tir (4), le lien (18) traversant radialement cette ouverture (28, 29, 31, 32, 42) pour être fixé en étant retenu fermement au niveau d'une face externe du canal de tir (4) lors de l'ouverture du volet (10) intervenant subséquemment au gonflage du coussin de sécurité, **caractérisé en ce que** au moins une ouverture traversée par le lien a une forme d'échancrure (28, 29, 31, 32) ou d'encoche (42) ouverte dans la face supérieure (36) ou dans la face inférieure du canal de tir (4).

2. Agencement selon la revendication 1, dans lequel le canal de tir (4) comporte des ouvertures en forme d'échancrures (28, 29, 31, 32) ouvertes dans la face supérieure (36) du canal de tir (4), et/ou des ouvertures en forme d'encoches (42) ouvertes dans la face inférieure du canal de tir (4).

3. Agencement selon la revendication 1, dans lequel le canal de tir comporte au niveau de ses bords latéraux (8, 9) des échancrures (28, 29, 31, 32), comportant chacune un col (34) débouchant dans la face supérieure (36) du canal de tir (4) et un corps d'ouverture (33) raccordé au col (34) et présentant des dimensions supérieures à celles du col (34), le corps d'ouverture (33) étant déporté par rapport au col (34) vers le bord d'articulation (11) du volet (10), et au moins un lien (18) solidarisé au volet (10) et présentant une portion qui traverse radialement une échancrure (28, 29, 31, 32) pour être retenu fermement au niveau de la face externe du canal de tir (4) afin de constituer une portion de lien (21, 22, 23, 24) limitant l'ouverture du volet (10).

4. Agencement selon la revendication 3, dans lequel le canal de tir (4) comporte un bord latéral (8, 9) pourvu de deux échancrures (28, 29, 31, 32) et dans lequel le lien (18) constitue localement une boucle traversant radialement le canal de tir (4) au niveau de ces deux échancrures (28, 29, 31, 32) en étant retenu par la portion de face externe du canal de tir (4) située entre les deux échancrures (28, 29, 31, 32).

5. Agencement selon l'une des revendications précédentes, dans lequel le canal de tir (4) comporte un bord (6) longeant le bord d'articulation (11) du volet (10), ce bord (6) étant pourvu d'une ou plusieurs encoches (42) débouchant dans la face inférieure du canal de tir (4), et comprenant au moins un lien (18) solidarisé au volet et traversant radialement l'encoche (42) en étant retenu au niveau de la face externe du canal de tir (4) pour constituer une articulation du volet (10) sur le corps de planche de bord (2).

6. Agencement selon la revendication 5, dans lequel le bord (6) du canal de tir longeant le bord d'articulation (11) du volet (10) comporte au moins deux encoches (42), et un lien (18) formant localement une boucle traversant radialement le canal de tir (4) au niveau de deux encoches (42), en étant retenu par la portion de face externe du canal de tir (4) située entre ces deux encoches (42) pour constituer une articulation du volet (10) sur le corps de planche de bord (2).

## Patentansprüche

1. Airbag-Anordnung (1) für ein Armaturenbrett eines Kraftfahrzeugs, umfassend ein Armaturenbrettgehäuse (2), das ein Fenster (3) zum Durchtritt eines Airbags aufweist, wobei eine Klappe (10) dieses Fenster (3) verschließt, indem sie an einem Gelenkverbindungsquerrand (6, 11) dieses Fensters angelenkt ist, wobei die Anordnung ferner einen Schusskanal (4) umfasst, der an der Unterseite des Armaturenbrettgehäuses (2) befestigt ist und einen Rahmen bildet, der das Fenster (3) umgibt, wobei dieser Schusskanal (4) eine ebene Unterseite aufweist, die zur Aufnahme eines Airbag-Moduls bestimmt ist, sowie mindestens eine Verbindung (18), die an der Klappe (10) und an dem Schusskanal (4) befestigt ist, um ein Scharnier zu bilden und/oder das Öffnen der Klappe (10) zu begrenzen, wobei der Schusskanal (4) mindestens eine Öffnung (28, 29, 31, 32, 42) umfasst, die relativ zum Fenster (3) radial ausgerichtet ist, um eine Innenseite und eine Außenseite einer Umrandung (8, 9, 6) des Schusskanals (4) in Kommunikation zu bringen, wobei die Verbindung (18) diese Öffnung (28, 29, 31, 32, 42) radial durchsetzt, um dadurch befestigt zu werden, sodass sie im Bereich einer Außenseite des Schusskanals (4) beim Öffnen der Klappe (10), das auf das Aufblasen des Airbags folgt, fest gehalten wird, **dadurch gekennzeichnet, dass** mindestens eine Öffnung, die von der Verbindung durchsetzt wird, eine Form einer zur Oberseite (36) oder Unterseite des Schusskanals (4) hin offenen Aussparung oder Kerbe (42) hat.

2. Anordnung nach Anspruch 1, wobei der Schusskanal (4) Öffnungen in Form von zur Oberfläche (36) des Schusskanals (4) hin offenen Aussparungen (28, 29, 31, 32) und/oder Öffnungen in Form von zur Unterseite des Schusskanals (4) hin offenen Kerben (42) umfasst.

3. Anordnung nach Anspruch 1, wobei der Schusskanal im Bereich seiner seitlichen Umrandungen (8, 9) Aussparungen (28, 29, 31, 32) umfasst, die jeweils einen Hals (34) umfassen, der in die Oberseite (36) des Schusskanals (4) mündet, sowie einen mit dem Hals (34) verbundenen Öffnungshauptabschnitt (33), der Abmessungen aufweist, die größer als die des Halses (34) sind, wobei der Öffnungshauptabschnitt (33) relativ zum Hals (34) in Richtung des Gelenkverbindungsrandes (11) zur Gelenkverbindung der Klappe (10) versetzt ist, und mindestens eine Verbindung (18), die mit der Klappe (10) verbunden ist und einen Abschnitt aufweist, der eine Aussparung (28, 29, 31, 32) radial durchsetzt, um im Bereich der Außenseite des Schusskanals (4) fest gehalten zu werden, um so einen Verbindungsabschnitt (21, 22, 23, 24) zu bilden, der das Öffnen der Klappe (10) begrenzt.

4. Anordnung nach Anspruch 3, wobei der Schusskanal (4) eine seitliche Umrandung (8, 9) umfasst, die mit zwei Aussparungen (28, 29, 31, 32) versehen ist, und wobei die Verbindung (18) lokal einen Bügel bildet, der den Schusskanal (4) im Bereich dieser beiden Aussparungen (28, 29, 31, 32) radial durchsetzt, indem sie durch den Außenseitenabschnitt des Schusskanals (4) gehalten wird, der sich zwischen den beiden Aussparungen (28, 29, 31, 32) befindet.

5. Anordnung nach einem der vorhergehenden Ansprüche, wobei der Schusskanal (4) eine Umrandung (6) umfasst, die sich längs des Gelenkverbindungsrandes (11) der Klappe (10) erstreckt, wobei diese Umrandung (6) mit einer oder mehreren Kerben (42) versehen ist, die in die Unterseite des Schusskanals (4) münden, und mit mindestens einer Verbindung (18), die mit der Klappe verbunden ist und die Kerbe (42) radial durchsetzt, indem sie im Bereich der Außenseite des Schusskanals (4) gehalten wird, um eine Gelenkverbindung der Klappe (10) am Armaturenbrettgehäuse (2) zu bilden.

6. Anordnung nach Anspruch 5, wobei die Umrandung (6) des Schusskanals, die sich längs des Gelenkverbindungsrandes (11) der Klappe (10) erstreckt, mindestens zwei Kerben (42) umfasst, und wobei eine Verbindung (18), die lokal einen Bügel bildet, den Schusskanal (4) im Bereich von zwei Kerben (42) radial durchsetzt, indem sie von dem Außenseitenabschnitt des Schusskanals (4) gehalten wird, der sich zwischen diesen beiden Kerben (42) befindet, um eine Gelenkverbindung der Klappe (10) am Armaturenbrettgehäuse (2) zu bilden.

## Claims

1. An arrangement (1) of an inflatable airbag of a motor vehicle instrument panel comprising an instrument panel body (2) having an aperture (3) for the passage of an inflatable airbag, a flap (10) closing this aperture (3) and articulated to a transverse articulation edge (6, 11) of this aperture, the arrangement also comprising a firing canal (4) fixed on the underside face of the instrument panel body (2) and forming a surround surrounding the aperture (3), this firing canal (4) having a flat lower face intended to accept an inflatable airbag module, at least one tether (18) fixed to the flap (10) and to the firing canal (4) to form a hinge and/or to limit the opening of the flap (10), the firing canal (4) comprising at least one opening (28, 29, 31, 32, 42) oriented radially with respect to the aperture (3) so as to establish communication between an internal face and an external face of an edge (8, 9, 6) of the firing canal (4), and the tether (18) passing radially through this opening (28, 29, 31, 32, 42) so as to be fixed while firmly retained at an external face of the firing canal (4) when the flap (10) opens subsequent to the inflation of the airbag, **characterized in that** at least one opening through which the tether passes is in the form of a slot (28, 29, 31, 32) or a notch (42) open in the upper face (36) or in the lower face of the firing canal (4).

2. The arrangement as claimed in claim 1, in which the firing canal (4) comprises openings in the form of slots (28, 29, 31, 32) open in the upper face (36) of the firing canal (4) and/or openings in the form of notches (42) open in the lower face of the firing canal (4).

3. The arrangement as claimed in claim 1, in which the firing canal comprises, at its lateral edges (8, 9), slots (28, 29, 31, 32) each having a neck (34) opening into the upper face (36) of the firing canal (4) and a body (33) of the opening which is connected to the neck (34) and is of dimensions greater than those of the neck (34), the body (33) of the opening being offset in relation to the neck (34) toward the articulation edge (11) of the flap (10), and at least one tether (18) secured to the flap (10) and having a portion with passes radially through a slot (28, 29, 31, 32) to be held firmly at the external face of the firing canal (4) in order to constitute a tether portion (21, 22, 23, 24) that limits the opening of the flap (10).

4. The arrangement as claimed in claim 3, in which the firing canal (4) comprises a lateral edge (8, 9) provided with two slots (28, 29, 31, 32) and in which the tether (18) locally forms a loop that passes radially through the firing canal (4) at these two slots (28, 29, 31, 32) while being held by the external face portion of the firing canal (4) that is situated between the two slots (28, 29, 31, 32).

5. The arrangement as claimed in one of the preceding claims, in which the firing canal (4) comprises an edge (6) running alongside the articulation edge (11) of the flap (10), this edge (6) being provided with one or more notches (42) opening into the lower face of the firing canal (4) and comprising at least one tether (18) secured to the flap and passing radially through the notch (42) while being held at the external face of the firing canal (4) in order to constitute an articulation of the flap (10) to the instrument panel body (2).

6. The arrangement as claimed in claim 5, in which the edge (6) of the firing canal that runs alongside the articulation edge (11) of the flap (10) comprises at least two notches (42), and a tether (18) that locally forms a loop passing radially through the firing canal (4) at two notches (42) while being held by the external face portion of the firing canal (4) that is situated between these two notches (42) so as to constitute an articulation of the flap (10) to the instrument panel body (2).
